# EUROPÄISCHE PATENTSCHRIFT

(11) **EP 2 748 489 B1**
(45) Veröffentlichungstag und Bekanntmachung des Hinweises auf die Patenterteilung: **10.02.2016**
(21) Anmeldenummer: 12740312.9
(22) Anmeldetag: 20.07.2012
(51) Int. Cl.: F16H 61/30, F16H 63/30

(54) **SCHALTKRAFTUNTERSTÜTZUNGSEINRICHTUNG**
SHIFTING-FORCE SUPPORT DEVICE
SYSTÈME D'ASSISTANCE AU CHANGEMENT DE RAPPORTS DE TRANSMISSION

(30) Priorität: 26.08.2011 DE 102011111296
(43) Veröffentlichungstag der Anmeldung: 02.07.2014
(73) Patentinhaber: Hoerbiger Automotive Komfortsysteme GmbH, 86956 Schongau (DE)
(72) Erfinder: HOECHTL, Michael, 82362 Weilheim (DE); JUNGBAUER, Klaus, 86956 Schongau (DE); KRATZ, Hubert, 86971 Peiting (DE); RÜCKINGER, Robert, 86971 Peiting (DE); MACKE, Wlodimierz, 82140 Olching (DE)
(74) Vertreter: Grättinger Möhring von Poschinger Patentanwälte Partnerschaft
(86) Internationale Anmeldenummer: PCT/EP2012/003058
(87) Internationale Veröffentlichungsnummer: WO 2013/029721

(56) Entgegenhaltungen:
- EP-A2- 1 205 692
- DE-A1- 10 322 037
- DE-A1- 19 539 471
- DE-A1-102006 023 527
- JP-A- 8 219 280

## Beschreibung

Die vorliegende Erfindung betrifft eine pneumatische Schaltkraftunterstützungseinrichtung für ein Schaltgetriebe, wobei zur Umsetzung der Drehbewegung einer Welle in eine Linearbewegung eines Schiebers oder umgekehrt ein mit der Welle verbundener Hebel vorgesehen ist, welcher einen Arm und einen in eine Aussparung des Schiebers eingreifenden Kopf aufweist, wobei der Kopf zwei einander gegenüberliegende, mit Gegenflächen der Aussparung des Schiebers zusammenwirkende Anlageflächen aufweist, wie offenbart in der DE 195 39 471 A1.

Schaltkraftunterstützungseinrichtungen für Schaltgetriebe sind namentlich bei Nutzfahrzeugen verbreitet im Einsatz, beispielsweise mit einem der DE 195 39 471 A1 entnehmbaren grundsätzlichen Aufbau. Typischerweise wirkt dabei über eine geeignete mechanische Koppelung der vom Fahrzeugführer betätigte Schaltknüppel auf einen ersten Schieber (Eingang) der Schaltkraftunterstützungseinrichtung, nämlich die sogenannte Steuerstange. Zwischen dieser Steuerstange und einem parallel zu dieser verschiebbaren zweiten Schieber, welcher den Ausgang der Schaltkraftunterstützungseinrichtung bildet, wirkt eine pneumatische Folgeregelung mit Kraftverstärkung, wobei hierzu typischerweise mit dem zweiten Schieber ein wahlweise auf jeder der beiden Seiten mit Druckluft beaufschlagbarer Kolben verbunden ist, weshalb der zweite Schieber oft auch als Kolbenstange bezeichnet wird.

Häufig umfasst die mechanische Koppelung des Schaltknüppels mit dem ersten Schieber, d.h. der Steuerstange, einen Hebelmechanismus dergestalt, dass ein auf einer Welle (Zwischenwelle) angebrachter Hebel mit einem Kopf in eine Aussparung des Schiebers eingreift. Zur Verdrehung der Zwischenwelle dient dabei typischerweise ein mit dieser fest verbundener Betätigungshebel, an welchem typischerweise ein mit dem Schaltknüppel verbundener Seilzugmechanismus (oder ein sonstiger mit dem Schaltknüppel gekoppelter Betätigungsmechanismus wie beispielsweise eine Betätigungsstange oder ein Hydraulikzylinder) angreift. Ein wesentlicher vorteilhafter Aspekt bei einer solchen Gestaltung ist, dass die Steuerstange vollständig gekapselt, d.h. vor Schmutzeinwirkung geschützt, innerhalb eines Gehäuses untergebracht werden kann, in welchem die Zwischenwelle dergestalt gelagert ist, dass der die Steuerstange betätigende Hebel innerhalb des Gehäuses, der mit dem Seilzugmechanismus (bzw. dem sonstigen Betätigungsmechanismus) in Verbindung stehende Betätigungshebel indessen außerhalb des Gehäuses angeordnet ist.

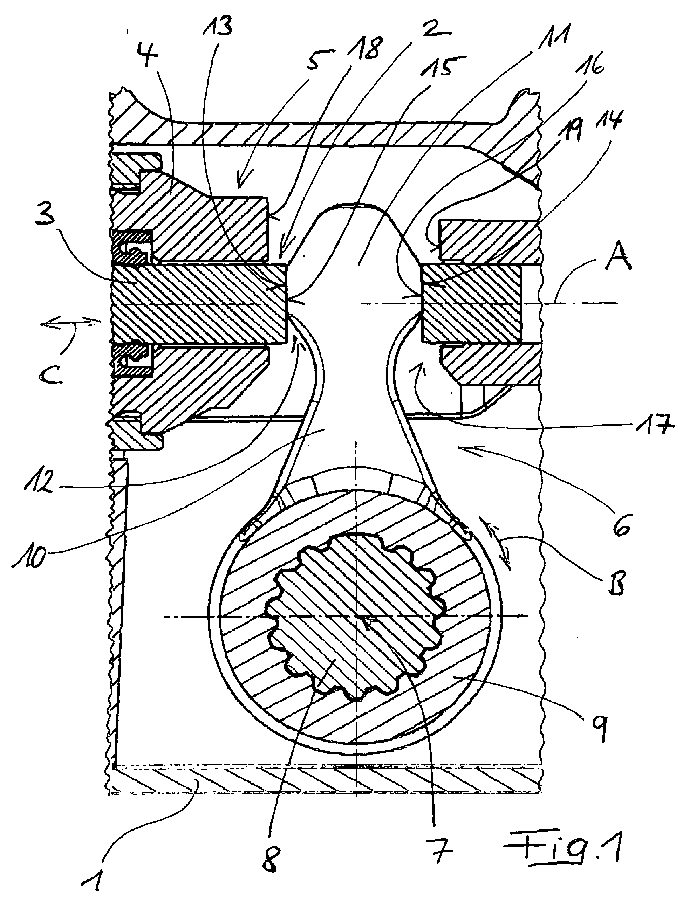

Um im Sinne einer Notbetätigung eine Schaltbarkeit des Schaltgetriebes auch bei einer Fehlfunktion der pneumatischen Schaltkraftunterstützungseinrichtung (z.B. durch Ausfall der Druckluftversorgung) zu erhalten, sind Schaltkraftunterstützungseinrichtungen realisiert worden, bei denen der mit der Welle verbundene Hebel nicht nur in eine Aussparung des ersten Schiebers, d.h. der Steuerstange eingreift, sondern auch in eine Aussparung des zweiten Schiebers, d.h. der Kolbenstange, wobei allerdings die Aussparung des zweiten Schiebers (der Kolbenstange) größer dimensioniert ist, sodass ein solches Spiel zwischen dem Kopf des Hebels und der Aussparung des zweiten Schiebers erhalten bleibt, welches die für die bestimmungsgemäße Funktion der Schaltkraftunterstützungseinrichtung erforderliche, mittels der pneumatischen Folgeregelung verarbeitete Bewegung des ersten Schiebers (der Steuerstange) relativ zu dem zweiten Schieber (der Kolbenstange) ermöglicht. Dieser Stand der Technik, nach unbestätigter Erinnerung der Anmelderin durch offenkundige Vorbenutzung in Nutzfahrzeugen der Daimler AG begründet, ist in Fig. 1 veranschaulicht.

Gemäß der JP 8-219280 A ist bei einer pneumatischen Schaltkraftunterstützungseinrichtung eine Notbetätigung dadurch realisiert, dass ein - über ein Gestänge die Schaltgabel eines nachgeschalteten Getriebes betätigender - Ausgangshebel nicht nur in eine in der Kolbenstange angeordnete Aussparung eingreift, sondern auch - mit eine definierte Relativbewegung von Kolbenstange und Steuerstange zueinander ermöglichendem Spiel - in eine Aussparung der Steuerstange. Dabei ist ein sphärisches Element des Ausgangshebels der Schaltkraftunterstützungseinrichtung von einer Hülse umgeben.

Bei alternativen Ausgestaltungen einer im Falle eines Ausfalls des Druckluftsystems wirksamen Notbetätigung sind zwischen der Steuerstange und der Kolbenstange wirkende Anschläge vorgesehen, die bei Überschreiten einer vorgegebenen Relativverschiebung der Steuerstange bezogen auf die Kolbenstange eine mechanische Koppelung bewirken, so dass über eine weitere Verschiebung der Steuerstange unmittelbar auch die Kolbenstange verschoben werden kann. Nach unbestätigter Erinnerung der Anmelderin wurden derartige Anschläge realisiert durch die Zahnradfabrik Friedrichshafen bei Getrieben für Nutzfahrzeuge von Daimler, Iveco, MAN und DAF.

Bei Schaltgetrieben ist bekannt (vgl. EP 1205692 A2), einen in einen Mitnehmer eingreifenden, beidseitig an diesem anliegenden Schaltfinger dergestalt mit federnden Elementen auszustatten, dass der Schaltfinger wenigstens einen durch ein Federelement erzeugten angefederten Kontakt zum Mitnehmer aufweist. Hierdurch soll - im Interesse einer Minderung störender Geräusche im Fahrzeug - eine Übertragung von Schwingungen aus dem Antriebsstrang auf den Schalthebel gedämpft werden.

Aus der DE 102006023527 A1 ist schließlich bekannt, bei einer für ein Handschaltgetriebe eines Kraftfahrzeug bestimmten Schaltvorrichtung mit einem in einen Mitnehmer eingreifenden Schaltfinger, der zur Bereitstellung einer variablen Übersetzung der Handschaltkraft mehrere mit dem Mitnehmer zusammenwirkende profilierte Abschnitte aufweist, den profilierten Abschnitten Federn oder sonstige kraftempfindliche Mittel zuzuordnen. Dies soll bei einer über den Schaltvorgang weitgehend ausgeglichenen Handschaltkraft den Schaltkomfort steigern.

Bei Schaltkraftunterstützungseinrichtungen mit einer weiter oben beschriebenen Notbetätigung mit einem in Aussparungen beider Schieber eingreifenden Hebel, sind - je nach der individuellen Ausgestaltung und den spezifischen Betriebsbedingungen mehr oder weniger ausgeprägt - beim Schalten Geräusche in Form von Schlägen wahrnehmbar. Hierzu durchgeführte Ermittlungen haben ergeben, dass diese Geräusche von einem Aufschlagen des zweiten Schiebers auf den Kopf des Hebels herrühren, wenn beim Schaltvorgang der Hebel zunächst nur den ersten Schieber (die Steuerstange) verschiebt, der zweite Schieber indessen trotz entsprechender pneumatischer Beaufschlagung des Kolbens aufgrund noch nicht abschließend erfolgter Synchronisation des Getriebes in dem einzulegenden Gang noch nicht nachgeführt werden kann und erst nach erfolgter Synchronisation des Getriebes hochdynamisch nachgeführt wird, sodass er gewissermaßen von hinten auf den Hebel schlagen kann. Mehr oder weniger ausgeprägte schlagende Geräusche treten indessen teilweise auch bei anderen gattungsgemäßen Schaltkraftunterstützungseinrichtungen auf, d.h. bei solchen, bei denen der Hebel nur in die Aussparung eines Schiebers eingreift.

Diesem Mangel zumindest in einem nennenswerten Maß abzuhelfen, d.h. die beim Schalten auftretenden schlagenden Geräusche zumindest substantiell zu reduzieren, ist Aufgabe der vorliegenden Erfindung. Eine weitere nebengeordnete Aufgabe der vorliegenden Erfindung kann darin gesehen werden, auch bei anderen als den vorstehend erläuterten pneumatischen Schaltkraftunterstützungseinrichtungen entstehende schlagende Schaltgeräusche, die beispielsweise bei einer hochdynamischen Beaufschlagung eines zwischen der Kolbenstange der Schaltkraftunterstützungseinrichtung und dem zu betätigenden Schaltgetriebe vorgesehenen Hebels durch die Kolbenstange entstehen können, zu reduzieren.

Gemäß der vorliegenden Erfindung wird die vorstehend angegebene Aufgabenstellung bei einer pneumatischen Schaltkraftunterstützungseinrichtung der gattungsgemäßen Art dadurch gelöst, dass der Kopf des Hebels zur Bildung zweier Kopfabschnitte zwischen den beiden Anlageflächen dergestalt geschlitzt ist, dass die beiden Anlageflächen um ein definiertes Maß aufeinander zu bewegt werden können. Mit anderen Worte ist bei der erfindungsgemäßen pneumatischen Schaltkraftunterstützungseinrichtung der in eine Aussparung des Schiebers der Schaltkraftunterstützungseinrichtung eingreifende Kopf des Hebels nicht in dem Sinne formstabil ausgeführt, dass der Abstand zwischen den beiden Anlageflächen unverändert vorgegeben ist, sondern der Kopf des Hebels ist vielmehr in gewissem Umfang verformbar, indem die beiden Anlageflächen unter den typischen bestimmungsgemäß auftretenden Kräften um ein definiertes Maß aufeinander zu bewegt werden können. Auf diese Weise kann der Kopf des Hebels, wenn der zugeordnete Schieber schlagartig auf ihn auftrifft, mit einer nachgiebigen Verformung hierauf reagieren. Hierdurch wird der betreffende Schlag gedämpft und nur dementsprechend abgeschwächt in die Welle eingeleitet. Insbesondere wird durch die nachgiebige Verformbarkeit des Kopfes des Hebels bei solchen Schaltkraftunterstützungseinrichtungen, bei denen der Kopf des Hebels in dem weiter oben beschriebenen Sinne in die Aussparungen zweier Schieber eingreift, auch ausgeschlossen, dass ein durch den zweiten Schieber (die Kolbenstange) auf die - in Betätigungsrichtung des Hebels - hintere Anlagefläche des Kopfes ausgeübter Schlag ungedämpft über den Kopf des Hebels und dessen gegenüberliegende Anlagefläche in den ersten Schieber (die Steuerstange) eingeleitet wird.

Gemäß einer ersten bevorzugten Weiterbildung der vorliegenden Erfindung ist vorgesehen, dass die Relativbewegung der beiden Kopfabschnitte des Hebels zueinander durch im Kopfbereich des Hebels vorgesehene Anschläge auf ein definiertes maximales Verformungsmaß begrenzt wird. Dies ist namentlich besonders zweckmäßig bei solchen pneumatischen Schaltkraftunterstützungseinrichtungen, bei denen der Hebel mit seinem Kopf, wie weiter oben dargelegt, in die Aussparungen zweier parallel zueinander verschiebbarer Schieber eingreift. Denn so ist bei einer Fehlfunktion der Schaltkraftunterstützungseinrichtung, z.B. beim Ausfall der Druckluftversorgung, ein Notbetrieb der Schaltung sichergestellt, indem - bei Aufbringung einer entsprechend hohen Handschaltkraft auf den Schaltknüppel - der Kopfbereich des Hebels um das definierte maximale Verformungsmaß verformt wird, bei welchem die Anschläge aneinander anliegen, sodass über den Hebel dann die volle Kraft auf den zweiten Schieber, d.h. die Kolbenstange übertragen werden kann. In diesem Zusammenhang kann es günstig sein, wenn die Anschläge dergestalt formschlüssig ineinandergreifen (z.B. durch eine Mikroverzahnung), dass bei aneinander anliegenden Anschlägen ein Gleiten der Anschläge aufeinander verhindert wird. Dies kann zu einer weiteren Aussteifung des Hebels im Notbetrieb, d.h. bei starker mechanischer Belastung beitragen, ohne dass die negative Auswirkungen auf die im Sinne der vorliegenden Erfindung angestrebte federnde Nachgiebigkeit der Kopfabschnitte im Normalbetrieb hätte.

Gemäß einer anderen, weiterhin bevorzugten Weiterbildung der Erfindung wirkt zwischen den beiden Kopfabschnitten ein verformbarer, mit beiden Kopfabschnitten verbundener Dämpfer. Dieser kann - durch die Dissipation von Verformungsenergie - zu einer maßgeblichen Reduzierung interner Schwingungen innerhalb des Hebels und somit sowohl einer abermals verbesserten Geräuschminderung als auch einer hohen Lebensdauer des Hebels beitragen. Weiterhin schließt ein solcher Dämpfer aus, dass die beiden Kopfbereiche des Hebels - bei einem entsprechend starken Schlag - an den weiter oben erläuterten Anschlägen ungebremst hart aufeinander schlagen. Als für die Herstellung des Dämpfers geeignetes Material kommen insbesondere Gummi, Kautschuk, elastomere Kunststoffe oder dergleichen in Betracht. Besonders vorteilhaft ist dabei für typische Anwendungsfälle eine Verbindung des Dämpfers mit den beiden Kopfabschnitten des Hebels dergestalt, dass eine Übertragung sowohl von Druckkräften als auch von Zugkräften möglich ist, z.B. durch Anvulkanisieren des Dämpfers in entsprechend geformte Aussparungen der beiden Kopfabschnitte; denn dies kann eine effiziente Dämpfung begünstigen und erlaubt, den Dämpfer ohne Vorspannung in den Raum zwischen den beiden Kopfabschnitten einzusetzen. Im Einzelfall kann indessen durchaus zweckmäßig sein, den Dämpfer unter einer definierten Vorspannung zwischen den beiden Kopfabschnitten zu platzieren, was sich nicht nur im Hinblick auf die Funktion, sondern auch auf die Herstellungskosten günstig auswirken kann.

Besonders günstig ist es dabei, wenn die Abmessungen des Dämpfers in Verformungsrichtung des Kopfes des Hebels wesentlich größer sind als das maximale Verformungsmaß des Kopfes. Auf diese Weise kann die Dämpfungswirkung des Dämpfers innerhalb des zur Verfügung stehenden Verformungsbereichs des Kopfes optimal genutzt werden.

Was die Gestaltung des erfindungsgemäß vorgesehenen Schlitzes angeht, so ist für typische Anwendungsfälle der vorliegenden Erfindung von Vorteil, wenn der Schlitz endseitig, d.h. radial außen offen ist. Dies gewährleistet bei typischen Dimensionen des Hebels im Sinne einer besonders effizienten Dämpfung eine Anpassung der zu der Verformung des Kopfes des Hebels aufzubringenden Kräfte an die tatsächlichen Verhältnisse. Eine entsprechende Anpassung der Nachgiebigkeit der Kopfabschnitte lässt sich erzielen, indem sich der Schlitz mehr oder weniger weit in den Arm des Hebels hinein erstreckt, d.h. mehr oder weniger weit radial nach innen reicht, so dass der Arm des Hebels zumindest bereichsweise in zwei Armanschnitte unterteilt ist. Bei typischen Anwendungsfällen ist es weiterhin vorteilhaft, wenn sich der Schlitz im Wesentlichen radial erstreckt und/oder der Hebel relativ zum Schlitz symmetrisch ausgeführt ist. Dies gilt jedenfalls dann, wenn der Hebel von bzw. von beiden Seiten im Wesentlichen übereinstimmend beaufschlagt wird. Indessen ist es für andere Anwendungsfälle mit durchaus erheblichen Vorteilen verbunden, wenn der Schlitz nicht symmetrisch innerhalb der Kontur des Hebels bzw. der Hebel nicht relativ zum Schlitz symmetrisch ausgeführt ist. Denn hierdurch lässt sich gezielt aktiv Einfluss nehmen auf die Charakteristik der Nachgiebigkeit der beiden Kopfabschnitte bei unterschiedlichen Schaltvorgängen (d.h. dem Einlegen unterschiedlicher Gänge) dergestalt, dass die Nachgiebigkeit des einen Kopfabschnitts einer anderen Kennlinie folgt als die Nachgiebigkeit des anderen Kopfabschnitts. Insoweit ist ergänzend zu betonen, dass aus dem Begriff "Schlitz" keinesfalls hergeleitet werden darf, dass der betreffende Einschnitt über seine gesamte Erstreckung eine im Wesentlichen konstante Spaltbreite aufweist. Im Gegenteil; auch und gerade durch eine Variation der Spaltbreite des Schlitzes über dessen Erstreckung kann aktiv gezielt Einfluss auch die angestrebte, ggf. unterschiedliche Nachgiebigkeit der beiden Kopfabschnitte genommen werden.

Im Sinne der weiter oben bereits erläuterten Aspekte wird die vorliegende Erfindung, weil in diesem Fall die zu erzielenden Vorteile besonders ausgeprägt sind, bevorzugt im Zusammenhang mit solchen Schaltkraftunterstützungseinrichtungen eingesetzt, bei denen ein weitere Schieber vorgesehen ist, wobei die beiden Schieber parallel zueinander verschiebbar sind und der zweite Schieber eine zweite Aussparung aufweist, die gegenüber der Aussparung des ersten Schiebers in Verschieberichtung größer dimensioniert ist und mit den Anlagenflächen des Kopfes des Hebels zusammenwirkende zweite Gegenflächen aufweist. Namentlich gilt dies, wenn die beiden Schieber koaxial zueinander ausgeführt sind, insbesondere indem der erste Schieber (die Steuerstange) koaxial in dem ihn umgebenden zweiten Schieber (der Kolbenstange) geführt ist.

Hinzuweisen ist schließlich darauf, dass in Anwendung der vorliegenden Erfindung die einleitend beschrieben schlagenden Geräusche mit einem besonders geringen konstruktiven und apparativen Aufwand substantiell reduziert werden können. Insbesondere ist der konstruktive sowie der Herstellungsaufwand weitaus geringer als bei der Ausführung mehrgliedriger Übertragungshebel, bei denen beispielsweise zwischen einem ersten, mit einer Welle verbundenen Hebelabschnitt und einem relativ zu diesem bewegbaren zweiten Hebelabschnitt, an welchem typischerweise eine Betätigungstange oder ein Betätigungsseil angreift, mittels eines Federmechanismus gegeneinander gesichert und um eine Neutralstellung herum in beiden Richtungen elastisch nachgiebig zueinander lageveränderbar sind. Zudem ermöglicht die vorliegende Erfindung die Dämpfung der beschriebenen schlagenden Geräusche unmittelbar am Ort der Entstehung, wohingegen die besagten federnden, mehrteiligen Betätigungshebel demgegenüber ausschließlich eine Übertragung der ungedämpft in die Welle eingeleiteten Schläge auf den Schaltknüppel reduzieren.

Im Folgenden wird die vorliegende Erfindung anhand zweier in der Zeichnung veranschaulichter Ausführungsbeispiele näher erläutert. Dabei zeigt
- Fig. 1: den hier maßgeblichen Bereich einer nach dem Stand der Technik ausgeführten Schaltkraftunterstützungseinrichtung,
- Fig.2: anhand eines ersten bevorzugten Ausführungsbeispiels die Umsetzung der vorliegenden Erfindung bei der Schaltkraftunterstützungseinrichtung nach Fig. 1 und
- Fig. 3: eine zweite bevorzugte Ausführungsform der konstruktiven Umsetzung der vorliegenden Erfindung.

Fig. 1 veranschaulicht den hier allein interessierenden Bereich einer konventionellen pneumatischen Schaltkraftunterstützungseinrichtung für ein Schaltgetriebe, welche, in einem Gehäuse 1 untergebracht und relativ zu diesem in Längsrichtung A verschiebbar, einen Schieber 2 umfasst, der, als Steuerstange 3 ausgeführt, den Eingang der Schaltkraftunterstützungseinrichtung bildet. Durch eine Kolbenstange 4, welche die Steuerstange 3 umgibt, die ebenfalls in dem Gehäuse 1 relativ zu diesem in Längsrichtung A verschiebbar geführt ist und somit einen zweiten Schieber 5 darstellt, ist der Ausgang der Schaltkraftunterstützungseinrichtung gebildet.

Zur Betätigung der Steuerstange 3 ist ein Hebel 6 vorgesehen, der mit einer in dem Gehäuse 1 um die Achse 7 drehbar gelagerten Welle 8 (Zwischenwelle) drehfest verbunden ist, wobei hierzu eine Nabe 9 des Hebels 6 und die Welle 8 über korrespondierende Profilierungen formschlüssig ineinandergreifen. An die Nabe 9 des Hebels 6 ist ein Arm 10 angeformt, welcher in einem Kopf 11 ausläuft. Der Kopf 11 greift dergestalt in eine Aussparung 12 der Steuerstange 3 ein, dass eine Verdrehung des Hebels 6 um die Achse 7 (vgl. Doppelpfeil B) eine Verschiebung der Steuerstange 3 in Längsrichtung A bewirkt (vgl. Doppelpfeil C). Hierzu wirken die einander gegenüberliegenden Anlageflächen 13 und 14 des Kopfes 11 des Hebels 6 auf - die Aussparung 12 begrenzende - Gegenflächen 15 und 16 der Steuerstange 3.

Zwischen der Steuerstange 3 und der Kolbenstange 4 wirkt, in als solches bekannter Weise und daher vorliegend nicht veranschaulicht, eine pneumatische Folgeregelung mit Kraftverstärkung. Für den Notbetrieb, insbesondere im Falle eines Ausfalls der Druckluftversorgung, lässt sich die Kolbenstange 4 allerdings auch direkt mittels des Hebels 6 verschieben. Hierzu weist die Kolbenstange 4 eine Aussparung 17 auf, in welche ebenfalls der Kopf 11 des Hebels 6 eingreift. Die Aussparung 17 der Kolbenstange 4 ist gegenüber der Aussparung 12 der Steuerstange 3 in Verschieberichtung A größer dimensioniert, so dass der Hebel - im Normalbetrieb der Schaltkraftunterstützungseinrichtung zur Verschiebung der Steuerstange 3 um ein gewisses Maß verdreht werden kann, ohne dass die Anlageflächen 13 und 14 des Kopfes 11 des Hebels 6 auf die die Aussparung 17 der Kolbenstange 4 begrenzenden Gegenflächen 18 bzw. 19 auftreffen.

Da die gezeigte Schaltkraftunterstützung insoweit dem hinlänglich bekannten Stand der Technik entspricht, sind weitere Erläuterungen entbehrlich.

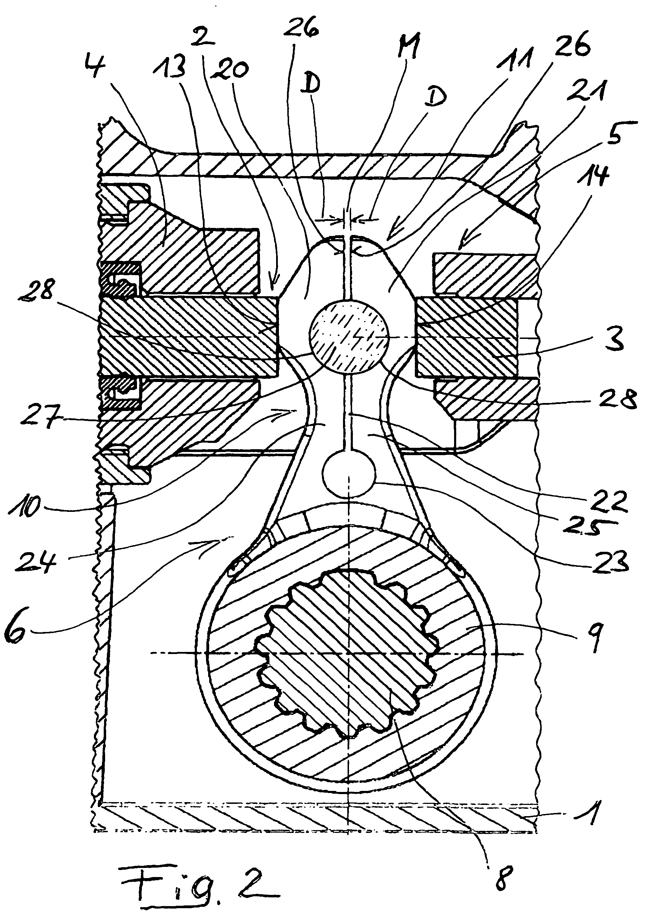

Gemäß der vorliegenden, durch Fig. 2 exemplarisch veranschaulichten Erfindung ist der Kopf 11 zur Bildung zweier Kopfabschnitte 20 und 21 zwischen den beiden Anlageflächen 13 und 14 dergestalt geschlitzt, dass die beiden Anlageflächen um ein definiertes Maß M aufeinander zu bewegt werden können (Pfeile D). Der entsprechende, endseitig (radial außen) offene Schlitz 22 erstreckt sich dabei im Wesentlichen radial, so dass der Hebel 6 relativ zum Schlitz 22 symmetrisch ausgeführt ist. Radial innen läuft der Schlitz 22 in einer Ausrundung 23 aus, und zwar im Hinblick auf Aspekte der Spannungsverläufe wie auch der elastischen Nachgiebigkeit der beiden durch jeweils einen Armabschnitt 24 bzw. 25 und den jeweils zugeordneten Kopfabschnitt 20 bzw. 21 gebildeten Bereiche.

Das maximale Verformungsmaß M der Relativbewegung der beiden Kopfabschnitte 20 und 21 relativ zueinander wird durch im Kopfbereich des Hebels 6 vorgesehene Anschläge 26 definiert begrenzt.

Zwischen den beiden Kopfabschnitten 20 und 21 wirkt ein aus einem elastomeren Material bestehender verformbarer Dämpfer 27. Dieser ist beidseitig in korrespondierenden, in den beiden Kopfabschnitten 20 und 21 vorgesehenen Aussparungen 28 aufgenommen und mit beiden Kopfabschnitten 20 und 21 - durch Anvulkanisieren - zug- und druckfest verbunden. Die Abmessung des Dämpfers in Verformungsrichtung des Kopfes 11 des Hebels 6 ist dabei bei der in Fig. 2 gezeigten Ausführungsform wesentlich größer als das maximale Verformungsmaß M des Kopfes 11 des Hebels 6.

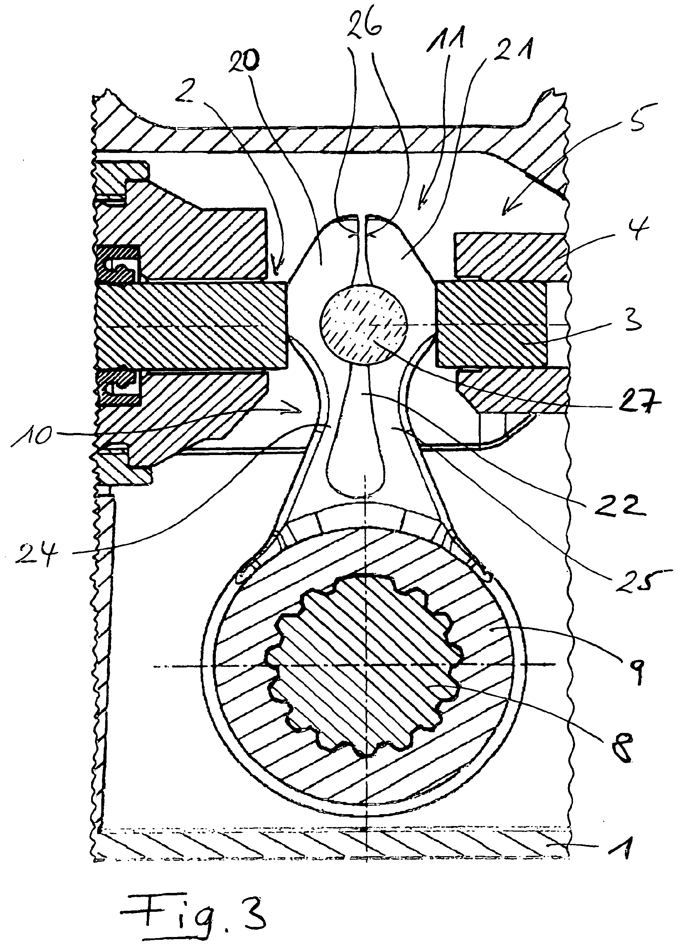

Das in Fig. 3 veranschaulichte Ausführungsbeispiel stimmt in wesentlichen Gesichtspunkten mit dem nach Fig. 2 überein, so dass - zur Vermeidung von Wiederholungen - auf die entsprechenden Erläuterungen der Fig. 2 verwiesen werden kann und nachstehend nur die Abweichungen erläutert werden.

So verändert sich bei dem in Fig. 3 gezeigten Hebel 6 die Spaltbreite des Schlitzes 22 über dessen Erstreckung, so dass, bei einer im Wesentlichen identischen äußeren Kontur des Hebels 6, die verbleibende Breite der beiden Armabschnitte 24 und 25 zum Einen geringer ist als bei dem Ausführungsbeispiel nach Fig. 2 und sich zum Anderen über die radiale Erstreckung der Armabschnitte 24 und 25 weniger ausgeprägt ändert. Weiterhin in der Schlitz 22 nicht symmetrisch ausgeführt, sondern vielmehr in sich asymmetrisch und aus der Symmetrieachse des Hebels 6 heraus verlagert, so dass die beiden Armabschnitte 24 und 25 unterschiedlich steif sind mit dem Ergebnis einer unterschiedlichen Nachgiebigkeit der beiden Kopfabschnitte 20 und 21. Ein im Wesentlichen vergleichbares Ergebnis ließe sich ersichtlich bei einer im Wesentlichen symmetrischen Ausführung des Schlitzes 22 durch eine asymmetrische Ausführung der Kontur des Hebels 6 erzielen.

## Patentansprüche

1. Schaltkraftunterstützungseinrichtung für ein Schaltgetriebe, wobei zur Umsetzung der Drehbewegung (B) einer Welle (8) in eine Linearbewegung (C) eines Schiebers (2) oder umgekehrt ein mit der Welle (8) verbundener Hebel (6) vorgesehen ist, welcher einen Arm (10) und einen in eine Aussparung (12) des Schiebers (2) eingreifenden Kopf (11) aufweist, wobei der Kopf (11) zwei einander gegenüberliegende, mit Gegenflächen (15, 16) der Aussparung (12) des Schiebers (2) zusammenwirkende Anlageflächen (13, 14) aufweist, **dadurch gekennzeichnet, dass** der Kopf (11) zur Bildung zweier Kopfabschnitte (20, 21) zwischen den beiden Anlageflächen (13, 14) dergestalt geschlitzt ist, dass die beiden Anlageflächen (13, 14) um ein definiertes Maß (M) aufeinander zu bewegt werden können.

2. Schaltkraftunterstützungseinrichtung nach Anspruch 1, **dadurch gekennzeichnet, dass** die Relativbewegung der beiden Kopfabschnitte (20, 21) zueinander durch im Kopfbereich des Hebels (6) vorgesehene Anschläge (26) auf ein definiertes maximales Verformungsmaß (M) begrenzt ist.

3. Schaltkraftunterstützungseinrichtung nach Anspruch 1 oder Anspruch 2, **dadurch gekennzeichnet, dass** zwischen den beiden Kopfabschnitten (20, 21) ein verformbarer, mit beiden Kopfabschnitten verbundener Dämpfer (27) wirkt.

4. Schaltkraftunterstützungseinrichtung nach Anspruch 3, **dadurch gekennzeichnet, dass** die Abmessungen des Dämpfers (27) in Verformungsrichtung des Kopfes (11) des Hebels (6) wesentlich größer ist als das maximale Verformungsmaß (M) des Kopfes.

5. Schaltkraftunterstützungseinrichtung nach einem der Ansprüche 1 bis 4, **dadurch gekennzeichnet, dass** der Schlitz (22) endseitig offen ist.

6. Schaltkraftunterstützungseinrichtung nach einem der Ansprüche 1 bis 5, **dadurch gekennzeichnet, dass** der Schlitz (22) sich im Wesentlichen radial erstreckt.

7. Schaltkraftunterstützungseinrichtung nach Anspruch 6, **dadurch gekennzeichnet, dass** der Hebel (6) relativ zum Schlitz (22) symmetrisch ausgeführt ist.

8. Schaltkraftunterstützungseinrichtung nach einem der Ansprüche 1 bis 5, **dadurch gekennzeichnet, dass** der Schlitz (22) in sich asymmetrisch gestaltet und/oder dass der Hebel (6) relativ zum Schlitz (22) asymmetrisch ausgeführt ist.

9. Schaltkraftunterstützungseinrichtung nach einem der Ansprüche 1 bis 8, **dadurch gekennzeichnet, dass** die Schaltkraftunterstützungseinrichtung einen weiteren Schieber (5) umfasst, wobei die beiden Schieber (2, 5) parallel zueinander verschiebbar sind und der zweite Schieber (5) eine zweite Aussparung (17) aufweist, die gegenüber der Aussparung (12) des ersten Schiebers (2) in Verschieberichtung (C) größer dimensioniert ist und mit den Anlageflächen (13, 14) des Kopfes (11) des Hebels (6) zusammenwirkende zweite Gegenflächen (18, 19) aufweist.

10. Schaltkraftunterstützungseinrichtung nach Anspruch 9, **dadurch gekennzeichnet, dass** die beiden Schieber (2, 5) koaxial ausgeführt sind.

## Claims

1. A gear shift assist device for a gearbox, wherein a lever (6) is provided to convert the rotary movement (B) of a shaft (8) into a linear movement (C) of a slide (2) or vice versa, said lever being connected to the shaft (8) and having an arm (10) and a head (11), which engages in a cut-out (12) in the slide (2), wherein the head (11) has two mutually opposite contact faces (13, 14), which interact with counter faces (15, 16) of the cut-out (12) in the slide (2), **characterised in that** the head (11) is slotted to form two head sections (20, 21) between the two contact faces (13, 14), in such a manner that the two contact faces (13, 14) can be moved towards each other by a defined amount (M).

2. The gear shift assist device according to Claim 1, **characterised in that** the relative movement of the two head sections (20, 21) towards each other is limited to a defined maximum deformation amount (M) by stops (26) provided in the head region of the lever (6).

3. The gear shift assist device according to Claim 1 or 2, **characterised in that** a deformable damper (27), which is connected to both head sections, is effective between the two head sections (20, 21).

4. The gear shift assist device according to Claim 3, **characterised in that** the dimensions of the damper (27) in the deformation direction of the head (11) of the lever (6) are much greater than the maximum deformation amount (M) of the head.

5. The gear shift assist device according to any one of Claims 1 to 4, **characterised in that** the slot (22) is open at the end.

6. The gear shift assist device according to any one of Claims 1 to 5, **characterised in that** the slot (22) extends substantially radially.

7. The gear shift assist device according to Claim 6, **characterised in that** the lever (6) is symmetrical relative to the slot (22).

8. The gear shift assist device according to any one of Claims 1 to 5, **characterised in that** the slot (22) itself is asymmetrical and/or the lever (6) is asymmetrical relative to the slot (22).

9. The gear shift assist device according to any one of Claims 1 to 8, **characterised in that** the gear shift assist device comprises a further slide (5), wherein the two slides (2, 5) can be displaced parallel to each other, and the second slide (5) has a second cut-out (17), which is larger in the displacement direction (C) than the cut-out (12) in the first slide (2) and has second counter faces (18, 19), which interact with the contact faces (13, 14) of the head (11) of the lever (6).

10. The gear shift assist device according to Claim 9, **characterised in that** the two slides (2, 5) are coaxial.

## Revendications

1. Dispositif pneumatique d'assistance au changement de vitesses pour une boîte de vitesses, dans lequel pour convertir le mouvement de rotation (B) d'un arbre (8) en un mouvement linéaire (C) d'un tiroir (2) ou inversement un levier (6) relié à l'arbre (8) est prévu, lequel présente un bras (10) et une tête (11) s'engageant dans une cavité (12) du tiroir (2), dans lequel la tête (11) présente deux surfaces de positionnement (13, 14) en vis-à-vis, coopérant avec des surfaces opposées (15,16) de la cavité (12) du tiroir (2), **caractérisé en ce que** la tête (11) afin de former deux portions de tête (20, 21) est fendue entre les deux surfaces de positionnement (13, 14), de telle sorte que les deux surfaces de positionnement (13, 14) peuvent être déplacées l'une sur l'autre dans une proportion définie (M).

2. Dispositif pneumatique d'assistance au changement de vitesses selon la revendication 1, **caractérisé en ce que** le mouvement relatif des deux portions de tête (20, 21) l'une par rapport à l'autre est limitée à une proportion de déformation (M) maximale définie par des butées (26) prévues dans la région de tête du levier (6).

3. Dispositif pneumatique d'assistance au changement de vitesses selon la revendication 1 ou 2, **caractérisé en ce que** entre les deux portions de tête (20, 21) un amortisseur (27) déformable, reliés aux deux portions de tête est opérationnel.

4. Dispositif pneumatique d'assistance au changement de vitesses selon la revendication 3, **caractérisé en ce que** les dimensions de l'amortisseur (27) dans la direction de déformation de la tête (11) du levier (6) sont essentiellement plus grandes que la proportion de déformation maximale (M) de la tête.

5. Dispositif pneumatique d'assistance au changement de vitesses selon une des revendications 1 à 4, **caractérisé en ce que** la fente (22) est ouverte à ses extrémités.

6. Dispositif pneumatique d'assistance au changement de vitesses selon une des revendications 1 à 5, **caractérisé en ce que** la fente (22) s'étend essentiellement radialement.

7. Dispositif pneumatique d'assistance au changement de vitesses selon la revendication 6, **caractérisé en ce que** le levier (6) est conçu de manière symétrique par rapport à la fente (22).

8. Dispositif pneumatique d'assistance au changement de vitesses selon une des revendications 1 à 5, **caractérisé en ce que** la fente (22) est conçue de manière asymétrique en soi et/ou **en ce que** le levier (6) est conçu de manière asymétrique par rapport à la fente (22).

9. Dispositif pneumatique d'assistance au changement de vitesses selon une des revendications 1 à 8, **caractérisé en ce que** le dispositif d'assistance au changement de vitesses comprend un deuxième tiroir (5), dans lequel les deux tiroirs (2, 6) sont coulissables parallèlement l'une à l'autre et le deuxième tiroir (5) présente une deuxième cavité (17), qui est dimensionnée plus grand par rapport à la cavité (12) du premier tiroir (2) dans la direction de coulissement (C) et présente des deuxièmes surfaces opposées (18, 19) coopérant avec les surfaces de positionnement (13, 14) de la tête (11) du levier (6).

10. Dispositif pneumatique d'assistance au changement de vitesses selon la revendication 9, **caractérisé en ce que** les deux tiroirs (2, 5) ont une configuration coaxiale.
